# EUROPEAN PATENT APPLICATION

(11) **EP 0 557 057 A1**
(43) Date of publication of application: **25.08.1993**
(21) Application number: 93301128.0
(22) Date of filing: 17.02.1993
(51) Int. Cl.: B23B 27/20, B24B 13/01, B24B 13/04

(54) **Tool for use in the manufacture of binary optical elements**

(30) Priority: 18.02.1992 US 837185
(71) Applicant: Hughes Aircraft Company, Los Angeles, California 90080-0028 (US)
(72) Inventor: Morrison, Donald, Rochester, CT 14618 (US)
(74) Representative: Colgan, Stephen James

(57) **Abstract**

A tool for use in the manufacture of binary optical elements includes a diamond chip affixed to a shank. The diamond chip is generally planar in shape and in one embodiment, has the cutting edge oriented in the direction of the maximum diamond wear resistance crystal lattice.

## Description

### BACKGROUND OF THE INVENTION

The present invention generally relates to a tool for use in the manufacture of binary optical elements and, in particular, relates to one such tool having a partial radius cutting tip.

In most instances binary optical elements are manufactured by means of a photolithographic process. These processes require the use of numerous masks and chemical etching, ion milling or other material removal techniques to effect the desired element. Although these processes are good there are a number of difficulties inherently associated with such processes. For example, since binary optical elements require accurate dimensions to achieve reasonable optical efficiency, the consecutive steps involving different masks requires very accurate mask registration techniques. This is quite critical to producing an acceptable binary optical element and is both difficult and expensive to achieve.

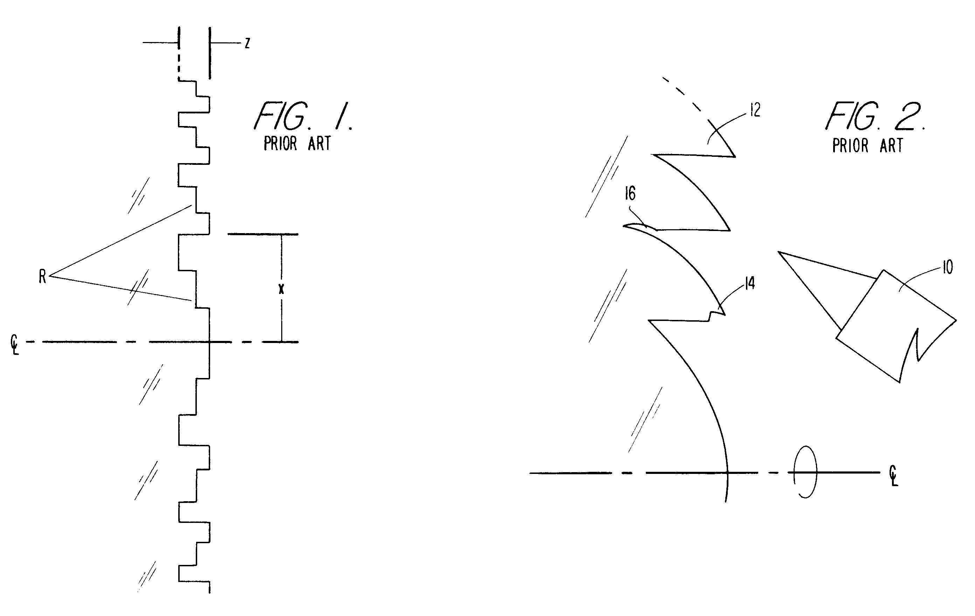

By way of example, a typical cross-sectional view of a binary optical element manufactured by photolithographic processes is shown in cross-section in Figure 1. In this illustration the "x" dimension is representative of the period, i.e., the repetition rate of the groups of binary steps, the dimension "r" is a radial distance about the centerline of the element and the dimension "z" represents the depth of each step. These dimensions are functions of the index of refraction of the material of the element and the wavelength of energy at which the binary optical elements functions. Typically, the "z" dimension is a fraction, or small multiple, of the elements operating wavelength. Consequently, the binary optical manufacturing process is costly and usually requires a long lead time.

More recently some binary optical elements have been manufactured by somewhat conventional mechanical machining techniques. Typically, such elements are made using commercially available diamond turning machines. A portion of a typical cross-sectional view of a binary optical element, including a conventional diamond cutting tool, is depicted in Figure 2.

As shown in Figure 2, a spherically pointed diamond tool 10 is used to cut the optical material 12. Typically, the spherical tip of the tool has a full tip radius that is about one-half millimeter or less. Such tools are known to wear or break in a relatively short time due to the high cutting forces required for cutting optical materials, such as germanium or other brittle crystals.

A further difficulty associated with the use of such full tip diamond cutting tools 10 is the damage caused by the stress applied to the optical element during the cutting process. As shown at 14 in Figure 2, the outside corner of the binary surface can readily fracture during machining. further, the inside corner, indicated at 16 in Figure 2, will also crack but to a lesser degree than the outside corner. Nonetheless, cutting the inside corner 16 causes excessive stress to the diamond tool 10 when the tool is cutting these areas. Both of these fractures modes can cause light scattering and thus reduce the efficiency and performance of the binary optical element. Another cause of light scattering is the non-sharp inside corner produced by the diamond tool radius.

From the above discussion, it is clear that what is needed is a tool that not only is capable of prolonged use in fabricating a binary optical element but a tool that reduces machining induced fractures, as well as being able to machine a sharp inside corner.

### SUMMARY OF THE INVENTION

Accordingly, it is one object of the present invention to provide a tool that is not only useful in the manufacture of binary optical elements but a tool that substantially overcomes the above-recited drawbacks associated with conventional diamond cutting tools used in the industry for this purpose.

Other objects and advantages will become apparent to those skilled in the art of manufacturing binary optical elements from the following detailed description of the invention read in conjunction with the appended claims and the drawing attached hereto.

### BRIEF DESCRIPTION OF THE DRAWING

The drawing, not drawn to scale, includes:
Figure 1 which is a cross-sectional view of a binary optical element made by conventional photolithographic type processes;
Figure 2 which is a cross-sectional view of a binary optical element made by conventional diamond turning processes;
Figures 3, 4 and 5 are top, side and front views of a tool, embodying the principles of the present invention, for use in the manufacture of binary optical elements; and
Figure 6 is an exaggerated plan view of the tool shown in Figures 3, 4 and 5 interfacing with the material of a binary optical element during manufacture includes a shank and a diamond tip affixed thereto.

### DETAILED DESCRIPTION OF THE INVENTION

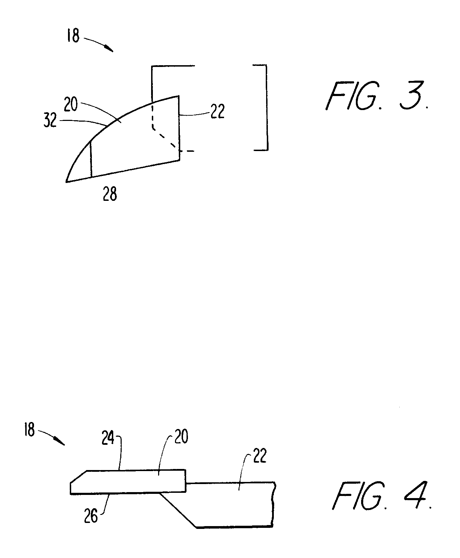

A tool, generally indicated at 18 in Figures 3 through 6, embodying the principles of the present invention for use in the manufacture of binary optical elements, includes a diamond tip 20 affixed to a tool shank 22.

In the preferred embodiment, the shank 22 is generally rectangular and has a taper at the end whereat the diamond tip 20 is affixed. Typically, the shank 22 is formed from a rigid material such as steel, although other materials would function just as well.

The diamond tip 20 is preferably a chip of diamond crystal having first and second major surfaces 24 and 26 respectively. The first and second surfaces 24 and 26 are generally defined by first and second straight edges 28 and 30 respectively that intersect each other at one end thereof. Preferably the diamond tip 20 includes a curved edge 32 that extends from one of the ends of the first straight edge 28 to the end of the second straight edge 30.

In this embodiment the diamond tip 20 includes a cutting edge 34 defined between two of the opposing straight edges of the opposing major surfaces 24 and 26. Preferably, the diamond tip 20 is disposed on the tapered end of the shank 22 such that the cutting edge 34 is generally parallel to the axis of the shank 22 and extends therebeyond. Further, because of the crystalline nature of diamond, in the preferred embodiment, the maximum wear resistance crystal lattice, i.e., the 1,0,0, plane is oriented in the direction of the cutting edge 34. Preferably although not necessarily the portion of the diamond tip 20 is provided with a taper 36. Such a taper 36 is provided so that it optimizes the surface finish on the material to be machine. Typically, the taper 36 can be from, for example, a +5° to -35° and is chosen to match the machinability of the different materials of the elements. For example, acrylic or aluminum usually calls for a +5° taper, whereas germanium usually calls for a -35° taper.

The diamond tip 20 may be brazed to the shank 22 or attached by use of other methods that are available in the art.

In one specific embodiment, the diamond tip 20 is about 0.060 inches thick having a first straight edge 28 about 0.120 inches long and a second straight edge 30 about 0.060 inches long. The curved edge 32 is in this embodiment defined by a radius in the range of 0.010 to 0.200 inches. The nose taper 36, or rake, is about 30 degrees downward as measured from the plane of the first major surface 24.
The relief, or clearance of the cutting edge 34 is about 15 degrees.

In operation, the workpiece is disposed on a vacuum chuck that has been previously machined to match the curvature of the lens. Thus, the lens is secured and can be easily adjusted to enable the binary surface to be generated concentric to not only the spherical surface but also the outside diameter.

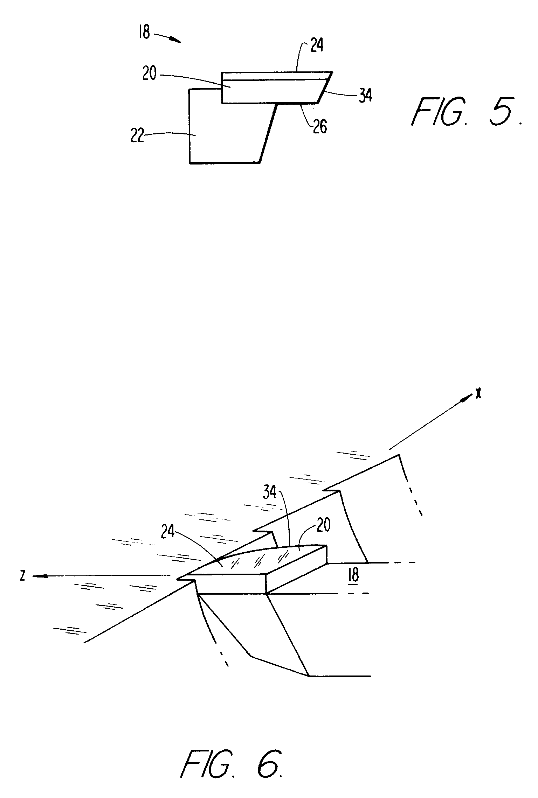

As shown in Figure 6, the tool 18 provides more cutting material, i.e. diamond, at the cutting interface than the prior art spherical cutting tool 10. Consequently, the tool 18 better survives the machining forces and thus does not chip, break or wear as quickly.

The present invention has been described and discussed with respect to an exemplary embodiment that is not deemed to be limiting as other designs may be made by persons skilled in the art without departing from the spirit and scope hereof. Hence, the present invention is deemed limited only by the appended claims and the reasonable interpretation thereof.

## Claims

1. A tool for use in the manufacture of binary optical elements, said tool comprising:
a shank; and
a diamond tip, said diamond tip being affixed to said shank, said diamond tip being a single crystal diamond chip having first and second major opposing surfaces, said surfaces defining a cutting edge between opposing edges thereof.

2. The tool as claimed in Claim 1, wherein said diamond tip is oriented such that the crystal lattice having the maximum wear resistance is substantially parallel with said cutting edge.

3. The tool as claimed in Claim 1, wherein said cutting edge has a relief angle of less than about 15 degrees.

4. The tool as claimed in Claim 1, wherein said shank includes a recess at one end thereof and said diamond tip is affixed to said shank at said recess.

5. The tool as claimed in Claim 1, wherein said shank is a generally rectilinear having a longitudinal axis.

6. The tool as claimed in Claim 5, wherein said diamond tip is oriented such that the crystal lattice having the maximum wear resistance is substantially parallel with said cutting edge.

7. The tool as claimed in Claim 1, wherein said diamond tip includes a rake.

8. The tool as claimed in Claim 7, wherein said rake is between +5 degrees and - 35 degrees with respect to said first major surface.

9. The tool as claimed in Claim 8, wherein said cutting edge has a relief angle of less than about 15 degrees.
